# EUROPEAN PATENT SPECIFICATION

(11) **EP 3 816 362 B1**
(45) Date of publication and mention of the grant of the patent: **11.09.2024**
(21) Application number: 20204433.5
(22) Date of filing: 28.10.2020
(51) Int. Cl.: E04F 11/18, F16B 2/14

(54) **SUPPORT FOR PANEL WITH SIDE BLOCKING DEVICE**
TRÄGER FÜR EINE PLATTE MIT SEITENBLOCKIERVORRICHTUNG
SUPPORT DE PANNEAU COMPORTANT UN DISPOSITIF DE BLOCAGE LATÉRAL

(30) Priority: 29.10.2019 IT 201900019988
(43) Date of publication of application: 05.05.2021
(73) Proprietor: Logli Massimo S.P.A., 20146 Milano (IT)
(72) Inventor: MARCHI, Riccardo, 20146 Milano (IT); MANGE', Stefano, 20146 Milano (IT); ORLANDINI, Paolo, 20146 Milano (IT); PIAZZINI, Samuele, 20146 Milano (IT); PISCITELLI, Lorenzo, 20146 Milano (IT); PALAI, Matteo, 20146 Milano (IT)
(74) Representative: Mannucci, Michele

(56) References cited:
- EP-A1- 3 121 345
- EP-A1- 3 372 748
- WO-A1-2018/047179
- WO-A1-2019/162825
- DE-A1- 102017 125 020
- DE-U1- 202017 105 703
- US-A1- 2016 298 375

## Description

### Technical Field

The present inventions relates to equipment for fastening, and supporting, structural or complementary panels in building industry, such as glazed frames, parapets, separating elements, etc.

More in particular, the invention relates to a support for a panel, especially, even if not exclusively, for a glazed panel, for walls, separating walls, parapets, etc.

### State of the Art

Currently, different types of supports are used for supporting glazed panels.

A type of support provides for a base, defining an open seat where the edge area of the panel is housed, and for a device, interposed between the panel and the base, for blocking the panel, or adjusting the inclination thereof, with respect to the base. An example of support is disclosed in the patent application no. WO2019162825, of the same Applicant.

The disclosed support is particularly innovative and is greatly appreciated by the market; however, as other known supports, it requires adjustments at both sides of the panel.

This can be particularly uncomfortable in all cases where the adjustment shall be made on a particularly exposed side, as protective measures shall be adopted to operate on the side to be adjusted.

### Summary

The object of the invention is to overcome the drawbacks of the prior art supports for panels.

In particular, an important object of the invention is to provide a support for a panel, especially, although not exclusively, for a glazed panel, allowing easy installation and adjustment of the panel by acting on only one side of the system.

A further important object of the invention is to provide a support for a panel, especially, although not exclusively, for a glazed panel, allowing the panel to be easily blocked.

A further important object of the invention is to provide a support for a panel, especially, although not exclusively, for a glazed panel, allowing to block the panel in a stable and durable way.

These and other objects, that will be better described below, are achieved through a support for a panel comprising:
- a support base defining a seat for housing the edge area of the panel, the seat having a underside, two opposite sides extending from the underside, and an opening for inserting the panel into the seat, the opening being provided at the ends of the sides, a first side comprising a respective undercut portion with respect to its own end,
- at least one blocking device for blocking the panel to the support base, the device being interposed between the panel and the support base, and comprising
   - a concave cradle for housing the end of the edge of the panel, the cradle comprising
      o a bottom,
      o a flank side element adapted to come into contact with a first surface of the panel on the side of the first side of the seat,
   - a panel side blocking unit interposed between the flank side element and the first side of the seat, the blocking unit comprising
      o at least one wedge-shaped element slidable on the outside of the flank element of the cradle from the underside of the seat towards the opening thereof and vice versa, the wedge-shaped element having a first abutment face on the outside of the flank side element of the cradle and an opposite second face, inclined with respect to the sliding direction of the wedge-shaped element,
      o at least one intermediate blocking element adapted to be arranged between the opposite second face of the wedge-shaped element and the undercut portion provided on the first side of the housing seat,
      o an adjustment screw screwed in a specifically threaded hole provided through the wedge-shaped element, the screw having an end adapted to abut against a portion of the cradle and an opposite end provided with a control head for a tool, so that a rotation of the screw in a first direction causes the wedge-shaped element to slide towards the opening of the panel housing seat, pushing the intermediate blocking element against the undercut portion of the first side of the seat, while a rotation of the screw in opposite direction causes the wedge-shaped element to slide in the opposite direction towards the underside of the seat,
   characterized in that the panel side blocking unit is interposed only between the flank side element and the first side of the panel housing seat, wherein between the second opposite side of the seat and the panel at least one abutment element is provided, against which the second surface of the panel abuts, so that the panel is blocked with its two surfaces in contact with the flank side element on one side, and the at least one fixed abutment element on the other side respectively, and wherein said flank side element of said cradle is made as a separate and distinct piece with respect to the bottom.

Preferably, the cradle comprises a rest body, on which the bottom for the edge of the panel is defined; at least one flank of the cradle, opposite to the flank side element, extends from the bottom. Preferably the flank of the cradle opposite the flank side element is less high, from the underside of the seat towards the opening thereof, than the flank side element, and more preferably it is high less than half the height of the flank side element.

Preferably, a first flank and a second flank, for containing the edge of the panel, extend opposite each other from the bottom. The first flank preferably comprises two portions projecting upwards and longitudinally spaced from each other to define a side space, where the flank side element is arranged; the first flank preferably has discontinuous surfaces of contact with the panel.

According to preferred embodiments, the first side of the base comprises a longitudinal rib projecting towards the opposite side, against which the flank side element abuts.

Preferably, the first flank abuts against the longitudinal rib.

According to preferred embodiments, the at least one abutment element comprises a longitudinal gasket fixed to the second side of the base or to an additional element fixed on the base in correspondence of, or in proximity to, this second side. In other embodiments, the at least one abutment element may comprise parts directly defined on the second side of the base, and may be not necessarily a gasket (for example, it may be defined by a portion of the same base).

According to preferred embodiments, the support comprises a device for longitudinal closing the portion of the opening of the said base defined on the side of the first side when the panel is inserted into the base; the longitudinal closing device preferably comprises a longitudinal gasket adapted to come into contact with the panel; wherein the longitudinal closing device preferably comprises a longitudinal section bar coupled to the end of the first side, this longitudinal gasket adapted to come into contact with the panel being fastened to the section bar.

According to preferred embodiments, the flank side element defines a sliding guide for the at least one wedge-shaped element.

According to preferred embodiments, the wedge-shaped element comprises two wedge-shaped portions spaced from each other, and the hole for the adjustment screw is provided in the space between the two wedge-shaped portions, two intermediate blocking elements being provided, each of which is adapted to interact with a respective wedge-shaped portion.

According to preferred embodiments, the at least one intermediate blocking element is cylindrical in shape.

According to preferred embodiments, the undercut portion of the first side of the seat has a curved shape, with preferably constant radius; the at least one intermediate blocking element has preferably an abutment surface for the undercut portion, whose shape is substantially complementary to that of the undercut portion.

According to preferred embodiments, the first side comprising the undercut portion has a segment inclined from the inside towards the outside of the seat, making reference to the direction from the seat underside to the opening, the segment being connected to the undercut.

According to preferred embodiments, when the glass is inserted in the seat, the distance, measured again in correspondence of the seat opening, between the sides and the respective surfaces facing the sides of the panel is such that the distance between the first side and the panel is greater than that between the second side and the panel.

The seat is preferably asymmetrical with respect to a longitudinal vertical plane passing through the centerline of the base, calculated with respect to the outside of the base.

According to preferred embodiments, the first side has at least one segment whose inclination is greater than that of any opposite second side; the seat is therefore more flared upwards in correspondence of the first side with respect to the second side.

According to preferred embodiments, the support comprises an apparatus for transversally displacing the edge area of the panel, this resulting in a change in the vertical inclination of the same panel.

The displacement apparatus preferably comprises at least a movable body interposed between the second surface of the panel and the cradle portion opposite the flank side element, the movable body being adapted to take more positions or configurations, to each of which corresponds a different distance between the edge area of the panel and the second side.

The movable body is kinematically connected to an element for controlling the movement thereof, which can be preferably actuated through a tool that is preferably inserted in the seat of the base through the opening.

The movable body has preferably variable thickness, more preferably it is of the wedge-type, i.e. it has two opposite operating faces inclined relative to each other, wherein the first operating face of the wedge-shaped movable body is in contact with the second surface of the panel, and the opposite second operating face moves on the cradle portion opposite the flank side element.

The interface surface of mutual sliding between the cradle portion opposite the flank side element and the movable body is preferably inclined with respect to the direction of longitudinal extension of the housing seat of the panel, so that the movable body, moving along the inclined interface surface, changes its transverse position inside the seat, therefore inside the cradle, i.e. it moves away from, or towards, the sides of the seat; The movable body is preferably of the wedge-type, with an operating face always parallel to, and in contact with, the second surface of the panel.

The movable body preferably comprises at least a rack-like portion, a pinion being provided, coupled to the rack that acts as control element for moving the movable body; the pinion is preferably pivoted on the cradle and can be rotated by means of a tool.

The movable body has preferably a first part, adapted to be arranged between the second surface of the panel and the cradle portion opposite the flank side element, and a second part, adapted to be arranged in a lane provided in the bottom of the cradle; the rack-like portion is preferably provided on this second part; the cradle portion opposite the flank side element has preferably a zig-zag profile and the facing operating face of the movable body has a corresponding shape complementary to this profile, to reduce the risk of accidental sliding between movable body and cradle when the pinion is not actuated and/or when the wedge-shaped element exerts the fastening action on the panel.

The movable body is preferably adapted to move along the at least one side of the cradle opposite the flank side element.

### Brief description of the drawing

The invention will be better understood by following the description below and the attached drawing, showing a non-limiting embodiment of the invention. More specifically, in the drawing:

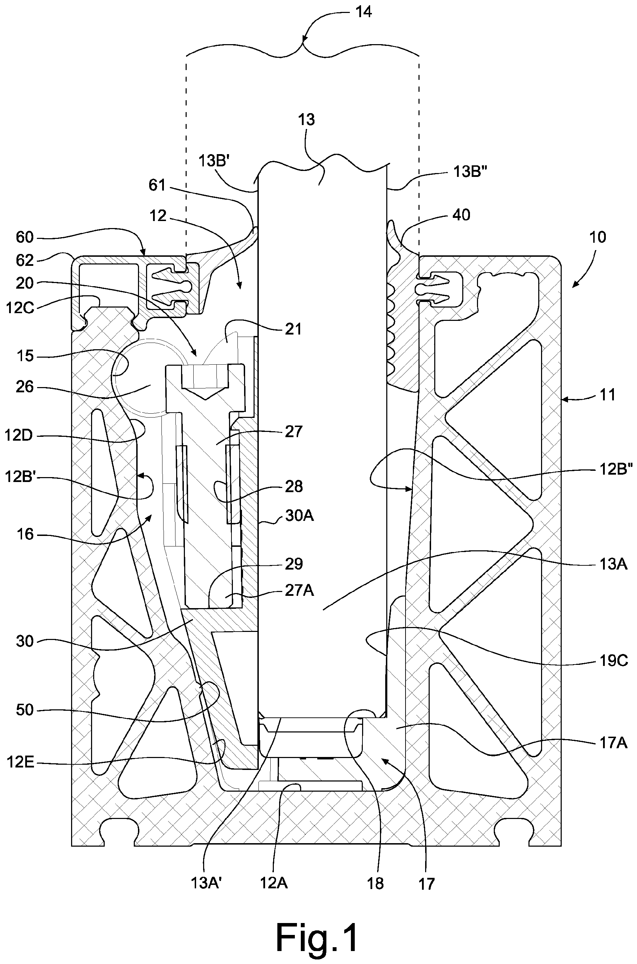

Fig. 1 is a transverse view of the support of the invention, during the panel blocking step, cut-away in correspondence of the adjustment screw;

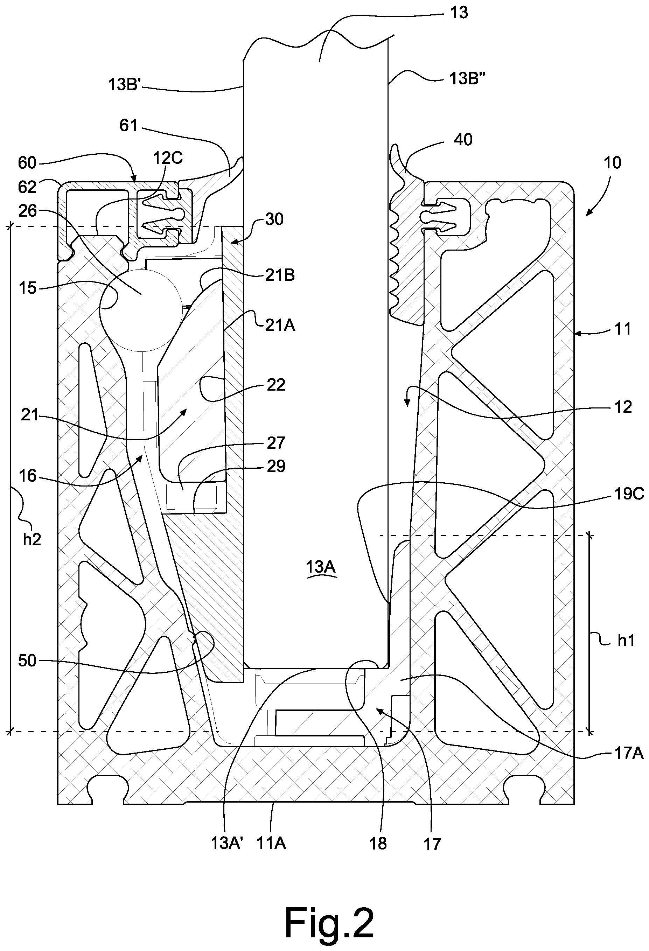

Fig. 2 is a transverse view of the support of the invention, during the panel blocking step, cut-away in correspondence of the cylindrical intermediate blocking element;
Fig. 3 is an exploded axonometric view of the support of the previous figures;
Fig. 4 is an axonometric view of part of the components of the device for blocking the panel to the base according to the support of the previous figures;
Fig. 5 is an axonometric view of a variant of the panel blocking device of the previous figures, for being integrated in a system allowing to adjust the panel inclination;
Fig. 6 is a front view of the support of the invention, with the blocking device of Fig. 5;
Fig. 7 shows a component of the blocking device of Fig. 5;
figs. 8a and 8b are views from the top of the blocking device of Fig. 5, with the component of Fig. 7 in two different positions;
Figs. 9a, 9b and 9c show three example of the support of Fig. 5, with the panel inclined in three different manner according to the movement of the component of Fig. 7.

### Detailed description of embodiments

With reference to the above cited figures, a support for a panel according to the invention is indicated as a whole with the reference number 10.

The support 10 comprises a support base 11, for example realized by a section bar (for instance made of aluminum or steel) provided with a base face 11A to be arranged on, and to be stably fastened to, a horizontal or almost horizontal surface, wherein in the section bar a channel open at the top is provided, defining a seat 12 open at the top for inserting the edge area 13A of a panel 13, for instance a glazed panel, to be installed vertically or almost vertically. The panel defines two opposite surfaces 13B' and 13B".

In other embodiments, the support base 11 may be used as vertical support, for example fastening the base 11 with the base face 11A very close to a wall, or even with a side face (i.e. the outer face of the base 11 orthogonal to the base face 11A) very close to the wall or to a jamb. Analogously, the support base 11 may be used as an inclined support for the panel 13.

The seat 12 has a underside 12A and two opposite sides, a first side 12B' and a second opposite side 12B" respectively, extending longitudinally, i.e. according to the extension of the base/section bar, from the underside 12A.

The reference number 14 indicates the opening, provided at the ends of the sides 12B' and 12B", for inserting the panel in the seat 12.

The first side 12B' comprises, near the end 12C thereof, an undercut portion 15 (undercut with respect to the side thickness, i.e. a recess in the side thickness).

In this example, the undercut portion 15 has a concave curved shape, and more precisely a shape with mainly constant radius, i.e. with a cross-section mainly shaped like an arc of a circle. A segment 12D is provided, which is inclined from the inside towards the outside of the seat 12, with reference from the underside 12A to the opening 14 of the seat, and is connected to the undercut portion 15.

The support 10 further comprises at least one blocking device 16 for blocking the panel 13 to the support base 11. One or more blocking devices 16 may be provided along the first side 12B', depending upon the length of the panel to be blocked (only one device 16t is shown in the figures).

The blocking device 16 is interposed between the panel 13 and the support base 11, and comprises a concave cradle 17 for housing the edge area 13A of the panel 13. The cradle comprises a bottom 18 and a flank side element 30 (made for example of plastic, such as POM) adapted to come into contact, with the portion 30A thereof, with a first surface 13B' of the panel, at the side of the first side 12B' of the seat 12.

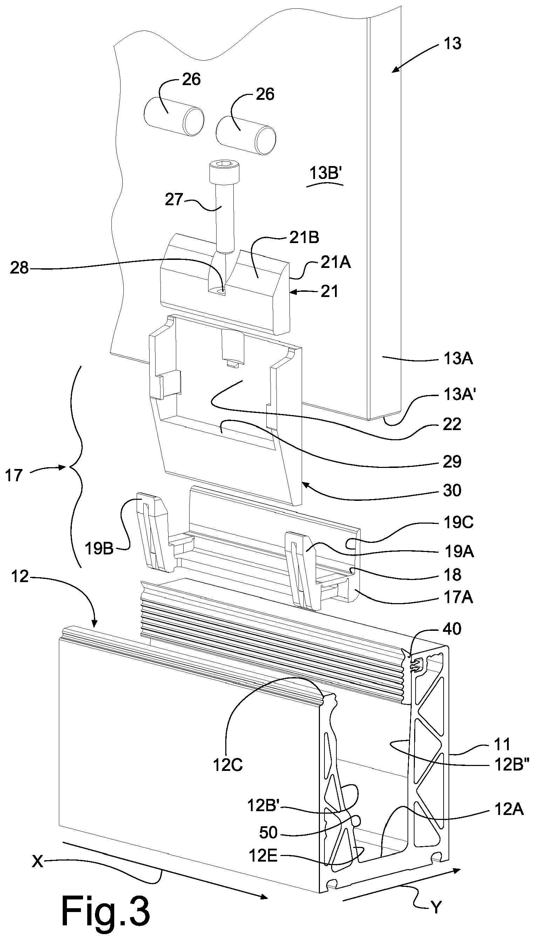

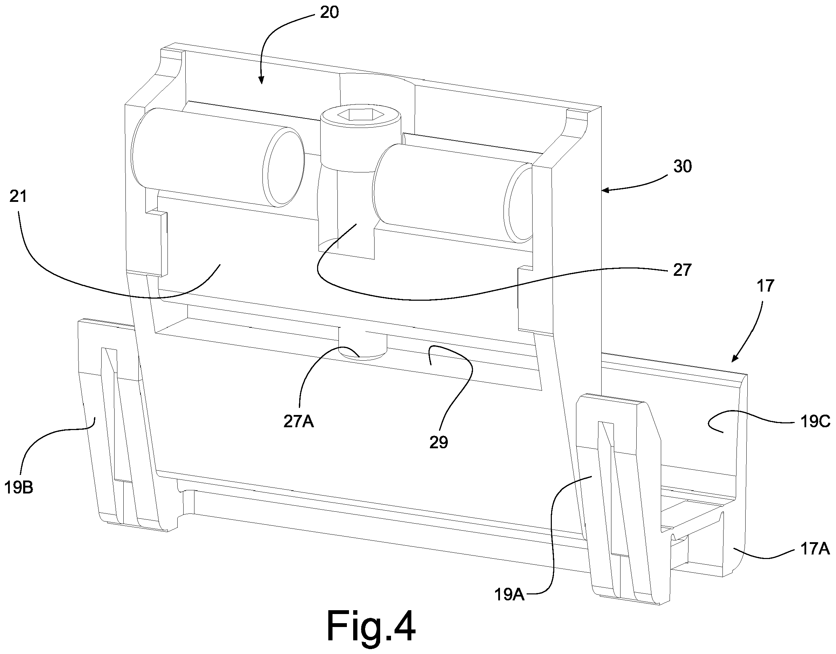

The cradle 17 comprises, for example, a rest body 17A (made for example of plastic, such as POM), onto which the bottom 18 is defined for the face 13A' of the edge area 13A of the panel, and from which two opposite flank extend, a first flank 19A-19B (shown in Figs. 3 and 4) and a second flank 19C, for containing the edge 13A of the panel.

In this example, the first flank has discontinuous surfaces of contact with the panel 13, and comprises at least two portions 19A and 19B projecting upwards and longitudinally spaced from each other to define a side space, where the flank side element 30 is arranged.

In practice, in this example, the cradle 17 is made in two pieces, i.e. the rest body 17A and the flank side element 30, to the advantage of easiness of installation and of support capability of blocking the panel. In other embodiments, the cradle may be made in a single piece, or in more than two pieces.

Adequately, the height h1, in the direction from the underside 12A to the opening 14 of the seat 12 (vertical direction in the figures), of the second flank 19C is lower than the height h2 of the flank side element 30; more preferably the height h1 is lower than half the height h2.

The blocking device 16 comprises a side blocking unit 20 for blocking the panel 13, which is interposed between the flank side element 30 and the first side 12B' of the seat 12. The blocking unit is associated with the first side 12B' and not with the second side, i.e. the side blocking unit is interposed only between the flank side element 30 and the first side 12B' of the seat housing the panel, whilst at least one fixed abutment element 40 is provided between the opposite second side 12B" of the seat and the panel, against which the second surface 13B" of the panel abuts, so that the panel is blocked with the two surfaces 13B thereof respectively in contact with the flank side element 30 on one hand and, on the other hand, with the abutment element 40 and the flank 19C of the cradle 17.

For example, the abutment element 40 is a longitudinal gasket (made for example of TPE, such as a mixture of EVA and LDPE) fastened to the second side 12B" of the base 11. In other embodiments, the gasket is fastened to a further element, for example a section bar, fastened to the base 11, at the upper part of the same base, in correspondence of, or close to, the second side 12B".

The first side 12B' of the base preferably comprises a longitudinal rib 50 projecting towards the opposite second side 12B". The part of the flank side element 30 opposite to the surface of contact with the panel abuts against this longitudinal rib 50. During the blocking step, the longitudinal rib 50 acts as a pivot for the flank side element 30.

In correspondence of the underside 12A, the first side 12B' of the seat 12 has a first flared portion 12E, to facilitate the right positioning of the set cradles 17/panel 13 in the seat. Adequately, in correspondence of the projecting portions 19A and 19B of the first flank of the cradle, the cradle 17 has respective flared shapes for abutting on the first flared portion 12E of the seat 12, so as to optimize the respective positioning cradle-seat. Therefore, the first side 12B" has at least one segment, whose inclination is greater than that of any opposite second side 12B"; the seat is therefore more flared upwards in correspondence of the first side with respect to the second side.

It should be therefore noted that in this example, when the glass is inserted in the seat, the distance, measured in correspondence of the opening 14 pf the seat 12, between the sides 12B' and 12B" and the respective surfaces of the panel 13 facing the sides is such that the distance between the first side 12B' and the panel is greater than that between the second side 12B" and the panel, as this latter distance in practice corresponds to the transverse width of the gasket 40.

The seat 12 is therefore asymmetrical with respect to a longitudinal vertical plane passing through the centerline of the base, calculated with respect to the outside of the same base.

The blocking unit 20 comprises a wedge-shaped element 21 (made for example of steel or aluminum), provided with a first face 21A and a second face 21B. The first face 21A abuts on the flank side element 30, so that the wedge-shaped element is slidable, in a sliding guide 22 defined on the outside of the flank side element 30 of the cradle 17, according to a direction from the underside 12A of the seat 12 towards the opening 14 and vice versa. The opposite second face 21B of the wedge-shaped element 21 is inclined relative to the sliding direction of the wedge-shaped element. In this example, the second face 21B is subdivided into two faces, as the wedge-shaped element 21 comprises a common segment 23, from which two wedge-shaped portions 24 extend, spaced from each other by a space 25.

The blocking unit 20 comprises, in this example, two intermediate blocking elements 26 adapted to be arranged between the inclined second faces 21B (related to the two wedge-shaped portions 24) of the wedge-shaped element 21 and the undercut portion 15 provided on the first side 12B' of the housing seat 12.

In this example, the intermediate blocking elements 26 are cylinders (made for example of plastic, for instance POM), whose radius substantially matches the radius of curvature of the undercut portion 15 (i.e. they have complementary shape).

The blocking unit 20 further comprises an adjustment screw 27, screwed in a specifically threaded hole 28, provided through the wedge-shaped element 21, in this example in correspondence of the space 25.

The screw 27 (made for example of steel) has an end 27A, adapted to abut against a portion 29 of the flank side element 30, and an opposite end, provided with a control head for a tool.

The flank side element 30 may be made of metal, for example, steel, or in any other material, for example plastic of adequate hardness.

The rotation of the screw in a first direction causes the wedge-shaped element 21 to slide towards the opening 14 of the housing seat 12 of the panel 13, so that the intermediate blocking elements 26 (the cylinders) push against respective undercut portions 15 of the first side 12B' of the seat 12, and thus the flank side element 30 pushes the surface of the panel, pushing this latter towards the second side 12B", and blocking it against the gasket 40. The rotation of the screw in opposite direction causes the wedge-shaped element 21 to slide in opposite direction towards the underside 12A of the seat 12, thus releasing it.

During installation, the panel is inserted into the seat and abuts against the gasket 40 in the final vertical position. By acting only on the blocking units on the first side of the seat of the section bar, the panel is blocked, without the need for acting on the opposite side.

The support 10 also comprises a device 60 for longitudinal closing the portion of the opening 14 of the base 11 defined on the side of the first side 12B' when the panel 13 is inserted into the base.

The longitudinal closing device 60 comprises, for example, a longitudinal gasket 61 adapted to come into contact with the panel 13.

The longitudinal closing device 60 comprises, for example, a longitudinal section bar 62 coupled to the end 12C of the first side 12B', and the longitudinal gasket is fastened to this section bar.

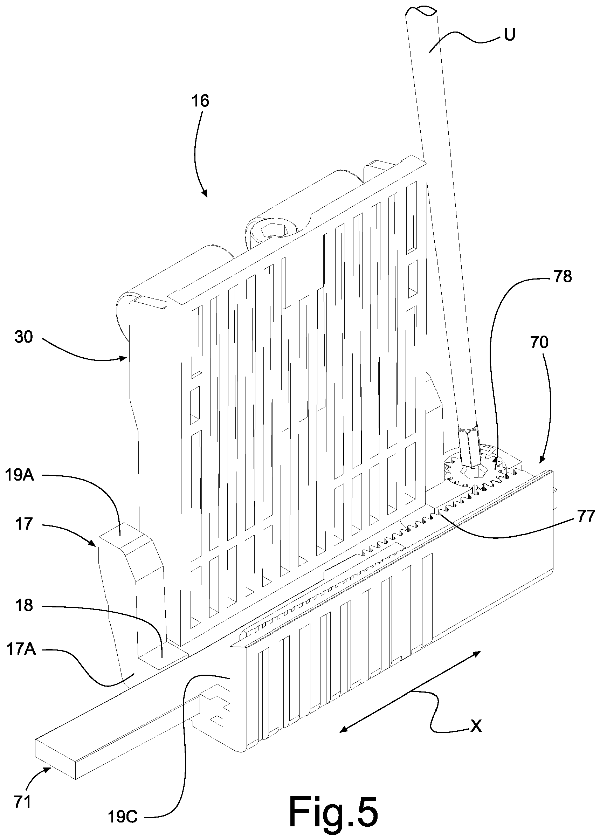

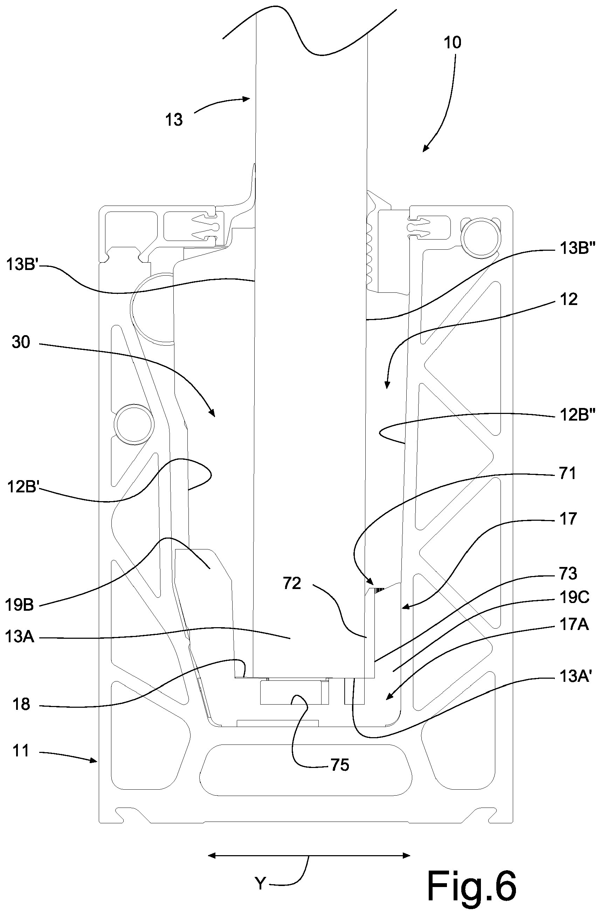

Figs. 5 to 9 show a further embodiments of the support of the invention, which is a variant of the embodiments illustrated above.

In particular, this variant provides for a transverse displacement apparatus 70 for transversally displacing the edge area 13A of the panel, thus changing the vertical inclination of the panel 13 and allowing therefor to adjust the panel inclination.

The term "transverse" or "transversally" preferably refers to a transverse direction Y orthogonal to the direction of extension of the base 11 (i.e. of the seat 12), indicated with X in Fig. 3, i.e. the direction from the side 12B' of the seat 12 to the opposite side 12B".

In this example, the transverse displacement apparatus 70 is integrated in the cradle 17 and comprises a movable body 71 interposed between the second surface 13B" of the panel 13 and the portion of the cradle 17 opposite to the flank side element, i.e. the second flank 19C of the rest body 17A of the cradle.

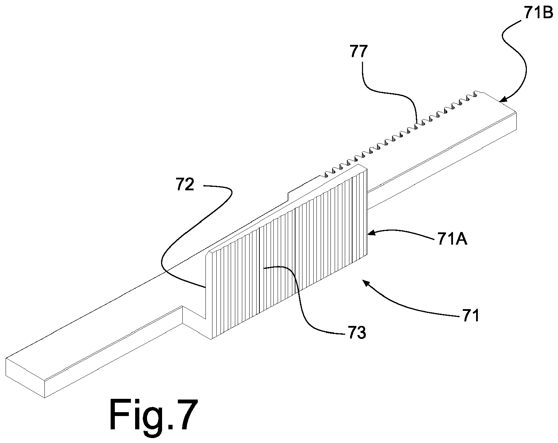

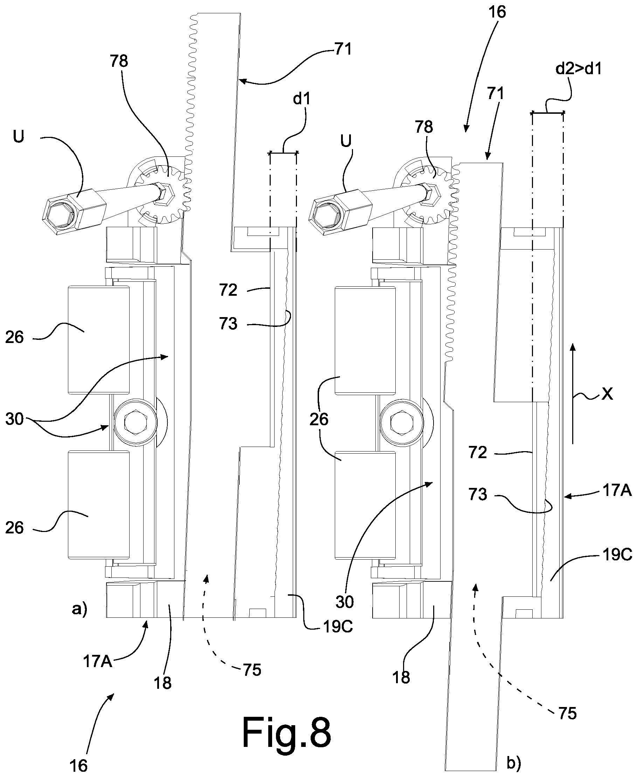

The movable body 71 is adapted to take more positions or configurations in the cradle, to each of which corresponds a different distance between the edge area 13A of the panel and the second side 12B" of the seat 12 (and therefore a different distance from the first side 12B', as the distance 12B'-12B" is fixed), as shown in Figs. 7 and 8.

The movable body 71 has preferably variable thickness; more specifically, in this example it is of the wedge-type, i.e. it has two opposite operating faces 72 and 73 inclined relative to each other, wherein the first operating face 72 is in contact with the second surface 13B" of the panel, and the opposite second operating face 73 moves along the second flank 19C of the rest body 17A of the cradle 17.

The interface surface of mutual sliding between the second flank 19C of the rest body 17A and the movable body 71 (i.e. the second operating face 73 thereof) is inclined and preferably shaped in zigzag fashion, as detailed below, with respect to the direction X of longitudinal extension, so that the movable body 71 moves along this inclined interface surface, changing the transverse position (i.e. the position along Y) thereof in the cradle, i.e. it moves away from, or towards, the sides 12B', 12B" of the seat 12, as shown in Figs. 7 and 8. It should be noted that, in this example, the movable body 17 is a wedge-shaped body with the first operating face 72 into contact with the second surface 13B" of the panel, and it remains alway parallel to itself during the motion along the second flank 19C of the rest body 17A of the cradle 17.

In this example, the movable body, shows alone in Fig. 7, has a first part 71A that forms the wedge-shaped portion provided with the two operating faces 72 and 73, and that is therefore arranged between the second surface 13B" of the panel and the second flank 19C of the rest body 17A of the cradle 17, and a second part 71B, such as a flat tab, that is arranged in a lane 75, provided on the bottom 18, extending for example in a direction parallel to the direction of mutual sliding between the second flank 19C and the movable body 71. The face 13A' of the edge 13A rests on the bottom 18, above the lane 75, essentially so that the panel does not touch the second part 71B of the movable body. In practice, the wedge-shaped movable body 71 can be seen as a slider guided by the lane 75 and adapted to wedge itself between the panel and the flank of the cradle, with a displacement of the panel (in correspondence of the edge area).

Adequately, the movable body 71 is kinematically connected to an element for controlling the movement thereof. In this regard, the movable body 71 comprises for example a rack-like portion 77, for example defined on the longitudinal edge of the flat tab defining the second part 71B of the movable body 71; a pinion 78, pivoted on the cradle (with vertical rotation axis, with reference to the drawing), is coupled to this rack-like portion 77 and acts as control element for controlling the movement of the movable body. Adequately, the pinion 78 can be actuated (i.e. rotated) through a tool U that can be inserted into the seat 12 from the base 11 through the opening 14 (the tool head, for example a hexagonal head, enters a corresponding profile on the pinion).

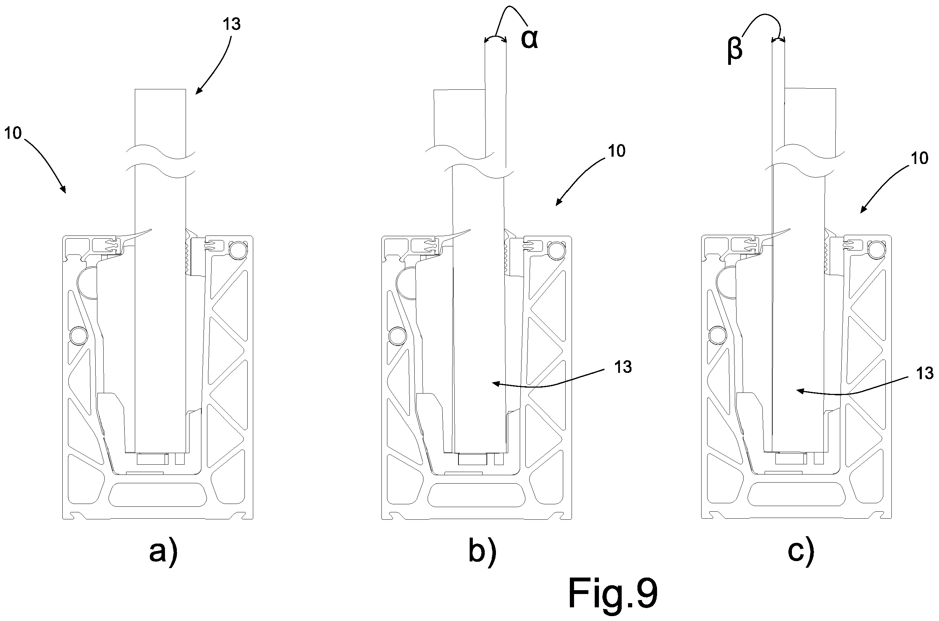

To adjust the inclination of the panel through the transverse displacement apparatus 70, it is necessary to loosen the blocking device 16 and then to act with the tool U on the pinion, which translates the movable body 71 along the second flank 19C of the rest body 17A of the cradle 17, thus pushing and moving the panel in transverse direction. Fig. 8a shows the movable body 17 in a first position, corresponding to the position of the lower edge 13A' of the panel closer to the second flank 19C (distance d1). Fig. 8b shows the movable body translated in opposite direction (through the rotation of the pinion 78 on the rack 77), in a second position, corresponding to the position of the lower edge 13A' of the panel farther from the second flank 19C (distance d2, where d2>d1). Different inclination of the panel with respect to the vertical correspond to these two positions. For example, Fig. 9a shows the movable body in a third position, intermediate between the two position described above, corresponding to the vertical position of the panel. Fig. 9b shows the inclined panel when the movable body 17 is in the second position (where the angular displacement with respect to the vertical position is indicated by the angle α); Fig. 9c shows the inclined panel when the movable body 17 is in the second position (where the angular displacement with respect to the vertical position is indicated by the angle β).

To prevent the movable body 17 from accidentally moving when it has achieved the desired position, the second flank 19C of the rest body 17A has a zigzag or wavy profile 79. On the facing second operating face 73 of the movable body 71 there is defined a corresponding matching i.e. complementary profile, thus reducing the risk of accidental mutual sliding and/or of sliding due to the pressure of the blocking device 16. Obviously, the coupling force due to the profile 79 is won by the push of the pinion on the rack during the adjustment step.

## Claims

1. A support for a panel comprising:
- a support base (11) defining a seat (12) for housing the edge area (13A) of the panel (13), said seat having a underside (12A), two opposite sides (12B', 12B") extending from said underside, and an opening (14) for inserting the panel into the seat, the opening being provided at the ends of said sides, a first side (12B') comprising a respective undercut portion (15) with respect to its own end,
- at least one blocking device (16) for blocking the panel to said support base, the device being interposed between the panel and said support base, and comprising
o a concave cradle (17) for housing the end of the edge of the panel, said cradle comprising
▪ a bottom (18),
▪ a flank side element (30) adapted to come into contact with a first surface (13B') of said panel on the side of said first side (12B') of said seat (12),
o a panel side blocking unit (20) interposed between said flank side element (30) and said first side (12B') of said seat, said blocking unit comprising
▪ at least one wedge-shaped element (21) slidable on the outside of said flank side element (30) of the cradle from the underside (12A) of said seat (12) towards the opening (14) thereof and vice versa, said wedge-shaped element having a first abutment face (21A) on the outside of said flank side element (30) of the cradle (17) and an opposite second face (21B), inclined with respect to the sliding direction of the wedge-shaped element,
▪ at least one intermediate blocking element (26) adapted to be arranged between said opposite second face (21B) of the wedge-shaped element (21) and said undercut portion (15) provided on said first side (12B') of said housing seat,
▪ an adjustment screw (27) screwed in a specifically threaded hole (28) provided through said wedge-shaped element (21), said screw having an end adapted to abut against a portion (29) of said cradle (17) and an opposite end provided with a control head for a tool, so that a rotation of said screw in a first direction causes said wedge-shaped element (21) to slide towards said opening (14) of the panel housing seat (12), pushing said intermediate blocking element (26) against said undercut portion (15) of said first side of said seat (12), while a rotation of said screw in opposite direction causes said wedge-shaped element (21) to slide in the opposite direction towards the underside (12A) of the seat,
**characterized in that** said panel side blocking unit (20) is interposed only between said flank side element (30) and said first side (12B') of the panel housing seat (12), wherein between the second opposite side (12B") of said seat (12) and said panel at least one abutment element (40) is provided, against which the second surface of the panel abuts, so that said panel is blocked with its two surfaces in contact with said flank side element (30) on one side, and said at least one fixed abutment element (40) on the other side respectively, and wherein said flank side element (30) of said cradle (17) is made as a separate and distinct piece with respect to said bottom (18).

2. The support for panel of claim 1, wherein said cradle (17) comprises a rest body (17A), on which said bottom (18) for the edge of the panel is defined, from which bottom at least one flank (19C) of said cradle extends, opposite to said flank side element (30).

3. The support for panel of claim 2, wherein said at least one flank (19C) of said cradle (17) opposite said flank side element (30) has height, in the direction from the underside (12) of said seat towards the opening (14) thereof, lower than that of said flank side element (30), and more preferably the height of the flank (19C) is lower than half the height of said flank side element (30).

4. The support for panel of claim 1, 2 or 3, wherein at least a first flank (19A, 19B) and a second flank (19C), opposite each other, extend from said bottom, for containing said edge of the panel.

5. The support of claim 4, wherein said first flank comprises two portions (19A, 19B) projecting upwards and longitudinally spaced from each other to define a side space, where said flank side element (30) is arranged.

6. The support for panel of claim 5, wherein said first flank (19A, 19B) has discontinuous contact surfaces with said panel.

7. The support for panel of one or more of the previous claims, wherein said first side (12B') of said base (12) comprises a longitudinal rib (50) projecting towards the opposite side, against which said flank side element (30) abuts.

8. The support for panel of claims 4, 5, or 6 and of claim 7, wherein said first flank (19A, 19B) abuts against said longitudinal rib (50).

9. The support for panel of one or more of the previous claims, wherein said at least one abutment element (40) comprises a longitudinal gasket fixed to the second side (12B") of said base (12), or to an additional element fixed on said base in correspondence of, or in proximity to, said second side.

10. The support of one or more of the previous claims, comprising a device (60) for longitudinal closing the portion of the opening (14) of said base (12) defined on the side of the first side (12B') when the panel is inserted into the base; preferably said longitudinal closing device (60) comprises a longitudinal gasket (61) adapted to come into contact with the panel; wherein the longitudinal closing device preferably comprises a longitudinal section bar (62) coupled to the end of the first side (12B'), this longitudinal gasket adapted to come into contact with the panel being fastened to the section bar.

11. The support for panel of one or more of the previous claims, wherein said flank side element (30) defines a sliding guide for said at least one wedge-shaped element (21).

12. The support for panel of one or more of the previous claims, wherein said wedge-shaped element (21) comprises two wedge-shaped portions (21A, 21B) spaced from each other, and wherein in the space between said two wedge-shaped portions, said hole (28) is provided for said adjustment screw (27), two intermediate blocking elements (26) being provided, each of which is adapted to interact with a respective said wedge-shaped portion.

13. The support for panel of one or more of the previous claims, wherein said at least one intermediate blocking element (26) is cylindrical in shape.

14. The support for panel of one or more of claims 1 to 12, comprising a transverse displacement apparatus (70) for moving the edge area (13A) of the panel, thus changing the vertical inclination of the same panel.

15. The support for panel of claim 14, wherein said displacement apparatus (70) comprises at least a movable body (71) interposed between said second surface (13B") of said panel and the cradle portion (19C) opposite said flank side element (30), said movable body being adapted to take more positions or configurations, to each of which corresponds a different distance between the edge area (13A) of the panel and the second side. (12B").

16. The support for panel of claim 15, wherein said at least one movable body (71) is kinematically connected to an element (78) for controlling the movement thereof, which can be preferably actuated through a tool (U) that is preferably inserted in the seat of the base through said opening.

17. The support for panel of claim 15 or 16, wherein said movable body (71) has preferably variable thickness, more preferably it is of the wedge-type, i.e. it has operating faces (72, 73) inclined relative to each other, wherein the first operating face (72) of the wedge-shaped movable body (71) is in contact with the second surface (13B") of the panel, and the opposite second operating face (73) moves on said cradle portion (19C) opposite said flank side element (30).

18. The support for panel of claim 15, 16, or 17, wherein the interface surface of mutual sliding between said cradle portion (19C) opposite said flank side element (30) and said movable body (71) is inclined with respect to the direction of longitudinal extension of said housing seat (12) of the panel, so that said movable body (71), moving along said inclined interface surface, changes its position inside said seat (12), therefore inside said cradle (17), i.e. it moves away from, or towards, the sides of said seat (12); said movable body is preferably of the wedge-type, with an operating face always parallel to, and in contact with, the second surface of said panel.

19. The support for panel of one or more of claims 15 to 18, wherein said movable body (71) comprises at least a rack-like portion (77), a pinion (78) being provided, coupled to said rack that acts as control element for moving said movable body (71); said pinion being preferably pivoted on said cradle and being rotatable by means of a tool.

20. The support for panel of claim 19, wherein said movable body (71) has preferably a first part (71A), adapted to be arranged between said second surface (12B") of said panel and the cradle portion (19C) opposite said flank side element (30), and a second part (71B), adapted to be arranged in a lane provided in the bottom of said cradle; said rack-like portion (77) being preferably provided on said second part; said cradle portion opposite said flank side element (30) having preferably a zigzag profile and the facing operating face of the movable body (71) having a corresponding shape complementary to this profile, to reduce the risk of accidental sliding between movable body and cradle when the pinion is not actuated.

21. The support for panel of claim 2 and of one or more of claims 17 to 20, wherein said movable body (71) is adapted to move along said at least one flank of said cradle, opposite said flank side element (30).

## Patentansprüche

1. Träger für eine Platte mit:
- einer Trägerbasis (11), die einen Sitz (12) zur Aufnahme des Kantenbereichs (13A) der Platte (13) definiert, wobei der Sitz eine Unterseite (12A), zwei gegenüberliegende Seiten (12B', 12B") aufweist, die sich von der Unterseite erstrecken, und eine Öffnung (14) zur Einfügung der Platte in den Sitz, wobei die Öffnung an den Enden der Seiten vorgesehen ist, wobei eine erste Seite (12B`) einen jeweiligen Unterschnitt-Bereich (15) mit Bezug auf sein eigenes Ende aufweist,
- mindestens ein Blockiervorrichtung (16) zum Blockieren der Platte an der Trägerbasis, wobei die Vorrichtung zwischen der Platte und der Trägerbasis eingefügt ist und aufweist
eine konkave Gabel (17) zur Aufnahme des Endes der Kante der Platte, wobei die Gabel aufweist
einen Boden (18),
ein Flanken-Seitenelement (30), das ausgebildet ist um in Kontakt mit einer ersten Fläche (13B') der Platte an der Seite der ersten Seite (12B`) des Sitzes (12) zu kommen,
eine Platten-Seiten-Blockiereinheit (20), die zwischen dem Flanken-Seitenelement (30) und in der ersten Seite (12B`) des Sitzes eingefügt ist, wobei die Blockiereinheit aufweist
mindestens ein keilförmiges Element (21), das an der Außenseite des Flanken-Seitenelements (30) der Gabel von der Unterseite (12A) des Sitzes (12) zu seiner Öffnung (14) und umgekehrt verschiebbar ist, wobei das keilförmiges Element eine erste Anschlagfläche (21A) an der Außenseite des Flanken-Seitenelements (30) der Gabel (17) und eine gegenüberliegende zweite Fläche (21B) aufweist, die mit Bezug auf die Verschiebungsrichtung des keilförmigen Elements geneigt ist,
mindestens ein Zwischen-Blockierelement (26), das ausgebildet ist, um zwischen der gegenüber liegenden zweiten Fläche (21B) des keilförmigen Elements (21) und dem Unterschnitt-Abschnitt (15), der auf der ersten Seite (12B') des Gehäusesitzes vorgesehen ist, angeordnet zu werden,
eine Stellschraube (27), die in ein bestimmtes Gewindeloch (28) eingeschraubt ist, das durch das keilförmiges Element (21) vorgesehen ist, wobei die Schraube ein Ende aufweist, das ausgebildet ist, um gegen einen Teil (29) der Gabel (17) anzuliegen, und ein gegenüberliegendes Ende, das mit einem Steuerkopf für ein Werkzeug versehen ist, sodass eine Drehung der Schraube in einer ersten Richtung verursacht, dass das keilförmiges Element (21) zu der Öffnung (14) des Plattenaufnahme-Sitzes (12) gleitet, wobei das Zwischen-Blockierelement (26) gegen den Unterschnitt-Abschnitt (15) an der ersten Seite des Sitzes (12) geschoben wird, während eine Drehung der Schraube in der entgegengesetzten Richtung verursacht, dass das keilförmiges Element (21) in der entgegengesetzten Richtung zu der Unterseite (12A) des Sitzes verschoben wird,
**dadurch gekennzeichnet, dass** die Platten-Seiten-Blockiereinheit (20) zwischen nur dem Flanken-Seitenelement (30) und der ersten Seite (12B`) des Platten-Aufnahmesitzes (12) eingefügt ist, wobei zwischen der zweiten gegenüberliegenden Seite (12B") des Sitzes (12) und der Platte mindestens ein Anschlagelement (40 vorgesehen ist, gegen das die zweite Fläche der Platte anliegt, sodass die Platte mit ihren beiden Flächen in Kontakt mit dem Flanken-Seitenelement (30) an einer Seite liegt und an dem mindestens einen festen Anschlagelement (40) an der anderen Seite, und wobei das Flanken-Seitenelement (30) der Gabel (17) als separates und unterscheidbares Teil mit Bezug auf den Boden (18) gefertigt ist.

2. Träger für eine Platte nach Anspruch 1, wobei die Gabel (17) einen Ruhekörper (17A) aufweist, auf dem der Boden (18) für die Kante der Platte definiert ist, wobei von dem Boden mindestens eine Flanke (19C) der Gabel ausgeht, gegenüber dem Flanken-Seitenelement (30).

3. Träger für eine Platte nach Anspruch 2, wobei die mindestens eine Flanke (19C) der Gabel (17) gegenüber dem Flanken-Seitenelement (30) eine Höhe in der Richtung von der Unterseite (12) des Sitzes zu seiner Öffnung (14) aufweist, die geringer ist als die des Flanken-Seitenelements (30), und vorzugsweise die Höhe der Flanke (19C) geringer ist als die Hälfte der Höhe des Flanken-Seitenelements (30).

4. Träger für eine Platte nach Anspruch 1, 2 oder 3, wobei mindestens eine erste Flanke (19A, 19B) und eine zweite Flanke (19C), die einander gegenüberliegen, sich von dem Boden erstrecken, um die Kante der Platte aufzunehmen.

5. Träger nach Anspruch 4, wobei die erste Flanke zwei Abschnitte (19A, 19B) aufweist, die sich nach oben erstrecken und voneinander in Längsrichtung beabstandet sind, um einen Seitenraum zu definieren, in dem das Flanken-Seitenelement (30) angeordnet ist.

6. Träger für eine Platte nach Anspruch 5, wobei die erste Flanke (19A, 19B) eine diskontinuierliche Kontaktfläche mit der Platte aufweist.

7. Träger für eine Platte nach einem oder mehreren der vorstehenden Ansprüche, wobei die erste Seite (12B`) der Basis (12) eine längliche Rippe (50) aufweist, die zu der gegenüberliegenden Seite vorsteht, gegen die das Flanken-Seitenelement (30) anliegt.

8. Träger für eine Platte nach Anspruch 4, 5 oder 6 und Anspruch 7, wobei die erste Flanke (19A, 19B) gegen die längliche Rippe (50) anliegt.

9. Träger für eine Platte nach einem oder mehreren der vorstehenden Ansprüche, wobei das mindestens eine Anschlagelement (40) eine längliche Dichtung aufweist, die an der zweiten Seite (12B") der Basis (12) befestigt ist, oder an einem zusätzlichen Element, das an der Basis entsprechend der zweiten Seite oder in deren Nähe befestigt ist.

10. Träger nach einem oder mehreren der vorstehenden Ansprüche mit einer Vorrichtung (60) zum länglichen Schließen des Teils der Öffnung (14) der Basis, die an der Seite der ersten Seite (12B') definiert ist, wenn die Platte in die Basis eingefügt ist, wobei vorzugsweise die längliche Verschlussvorrichtung (60) eine längliche Dichtung (61) aufweist, die ausgebildet ist, um mit der Platte in Kontakt zu kommen, wobei die längliche Verschlussvorrichtung vorzugsweise eine längliche Profilschiene (62) aufweist, die mit dem Ende der ersten Seite (12B') verbunden ist, wobei diese längliche Dichtung ausgebildet ist, um mit der Platte in Kontakt zu kommen, die an der Profilschiene befestigt ist.

11. Träger für eine Platte nach einem oder mehreren der vorstehenden Ansprüche, wobei das Flanken-Seitenelement (30) eine Schubführung für das mindestens eine keilförmige Element (21) definiert.

12. Träger für eine Platte nach einem oder mehreren der vorstehenden Ansprüche, wobei das keilförmige Element (21) zwei keilförmige Abschnitte (21A, 21B) aufweist, die voneinander beabstandet sind, und wobei in dem Raum zwischen den beiden keilförmigen Abschnitten das Loch (28) für die Stellschraube (27) vorgesehen ist, wobei zwei zwischen-Blockierelemente (26) vorgesehen sind, wobei jedes ausgebildet ist, um mit einem jeweiligen keilförmigen Abschnitt zusammenzuwirken.

13. Träger für eine Platte nach einem oder mehreren der vorstehenden Ansprüche, wobei das mindestens eine Zwischen Blockierelement (26) in der Form zylindrisch ist.

14. Träger für eine Platte nach einem oder mehreren der Ansprüche 1 bis 12 mit einem Querverschiebungsgerät (70) zum Bewegen des Kantenbereichs (13A) der Platte, wodurch die vertikale Neigung der Platte geändert wird.

15. Träger für eine Platte nach Anspruch 14, wobei das Verschiebungsgerät mindestens einen bewegbaren Körper (71) aufweist, der zwischen der zweiten Fläche (13B") der Platte und dem Gabelbereich (19C) gegenüber dem Flanken-Seitenelement (30) eingefügt ist, wobei der bewegbare Körper ausgebildet ist, um mehrere Positionen oder Konfigurationen einzunehmen, von denen jede einem unterschiedlichen Abstand zwischen dem Kantenbereich (13A) der Platte und der zweiten Seite (12B") entspricht.

16. Träger für eine Platte nach Anspruch 15 wobei der mindestens eine bewegbare Körper (71) kinematisch mit einem Element (78) zur Steuerung seiner Bewegung verbunden ist, das vorzugsweise über ein Werkzeug (U) betätigt wird, dass vorzugsweise in den Sitz der Basis durch die Öffnung eingebracht wird.

17. Träger für eine Platte nach Anspruch 15 oder 16, wobei der bewegbare Körper (71) vorzugsweise eine variable Dicke aufweist, wobei er vorzugsweise vom Keiltyp ist, d. h. er hat Betriebsflächen (72, 73), die relativ zueinander geneigt sind, wobei die erste Betriebsfläche (72) des keilförmigen bewegbaren Körpers (71) in Kontakt mit der zweiten Fläche (13B") der Platte steht und die gegenüberliegende zweite Betriebsfläche (73) sich auf dem Gabelbereich (19C) gegenüberliegend des Flanken-Seitenelements (30) bewegt.

18. Träger für eine Platte nach Anspruch 15, 16 oder 17, wobei die Grenzfläche für das gegenseitige Verschieben zwischen dem Gabelabschnitt (19C) gegenüberliegend dem Flanken-Seitenelement (30) und dem bewegbaren Körper (71) mit Bezug auf die Richtung der Längsausdehnung des Gehäusesitzes (12) der Platte geneigt ist, sodass der bewegbare Körper (71), der sich entlang der geneigten Grenzfläche bewegt, seine Position innerhalb des Sitzes (12) und somit innerhalb der Gabel (17) ändert, d. h. er bewegt sich von oder zu den Seiten des Sitzes (12), wobei vorzugsweise der bewegbare Körper vom Keiltyp ist, mit einer Betriebsfläche, die immer parallel zu und in Kontakt mit der zweiten Fläche der Platte ist.

19. Träger für eine Platte nach einem oder mehreren der Ansprüche 15 bis 18, wobei der bewegbare Körper (71) einen Zahnstangen-Bereich (77) aufweist, wobei ein Stirnrad (78) vorgesehen ist, das mit der Zahnstange verbunden ist, das als Steuerelement zur Bewegung des bewegbaren Körpers (71) dient, wobei das Stirnrad vorzugsweise auf der Gabel angelenkt ist und mittels eines Werkzeugs drehbar ist.

20. Träger für eine Platte nach Anspruch 19, wobei der bewegbare Körper (71) vorzugsweise einen ersten Teil (71A) aufweist, der ausgebildet ist, um zwischen der zweiten Fläche (12B") der Platte und dem Gabelabschnitt (19C) gegenüber des Flanken-Seiten Elements (30) angeordnet zu werden, und einen zweiten Teil (71B), der ausgebildet ist, um in einer Spur, die in dem Boden der Gabel ausgebildet ist, angeordnet zu sein, wobei der Zahnstangen-Bereich (77) vorzugsweise auf dem zweiten Teil vorgesehen ist, wobei der Gabelabschnitt gegenüber dem Flanken-Seitenelement (30) vorzugsweise ein Zickzack-Profil aufweist und die gerichtete Betriebsfläche des bewegbaren Körpers (71) eine entsprechend komplementäre Form zu diesem Profil aufweist, um das Risiko von versehentlichem Gleiten zwischen dem bewegbaren Körper und der Gabel zu vermindern, wenn das Stirnrad nicht betätigt wird.

21. Träger für eine Platte nach Anspruch 2 und einem oder mehreren der Ansprüche 17 bis 20, wobei der bewegbare Körper (71) ausgebildet ist, um sich entlang von mindestens einer Flanke der Gabel gegenüber des Flanken-Seitenelements (30) zu bewegen.

## Revendications

1. Un support pour panneau comprenant :
- une base de support (11) formant un siège (12) pour recevoir la zone de bordure (13A) du panneau (13), ledit siège ayant côté inférieur (12A), deux côtés opposés (12B', 12B") s'étendant depuis ledit côté inférieur et une ouverture (14) pour introduire le panneau dans le siège, l'ouverture étant prévue aux extrémités desdits côtés, un premier côté (12B') comprenant une partie respective en contre-dépouille (15) par rapport à sa propre extrémité,
- au moins un dispositif de blocage (16) pour bloquer le panneau sur ladite base de support, le dispositif étant interposé entre le panneau et ladite base de support, et comprenant
o un berceau concave (17) pour loger l'extrémité du bord du panneau, ledit berceau comprenant
▪ un fond (18),
▪ un élément latéral formant flanc (30) apte à venir en contact avec une première surface (13B') dudit panneau sur le côté dudit premier côté (12B') dudit siège (12),
o une unité de blocage de côté de panneau (20) interposée entre ledit élément latéral formant flanc (30) et ledit premier côté (12B') dudit siège, ladite unité de blocage comprenant
▪ au moins un élément en forme de cale (21) pouvant glisser à l'extérieur dudit élément latéral formant flanc (30) du berceau depuis le côté inférieur (12A) dudit siège (12) vers son ouverture (14) et vice-versa, ledit élément en forme de cale ayant une première face formant butée (21A) à l'extérieur dudit élément latéral formant flanc (30) du berceau (17) et une deuxième face opposée (21B), inclinée par rapport à la direction de glissement de l'élément en forme de cale,
▪ au moins un élément de blocage intermédiaire (26) apte à être agencé entre ladite deuxième face opposée (21B) de l'élément formant cale (21) et ladite partie formant contre-dépouille (15) prévue sur ledit premier côté (12B') dudit siège de réception,
▪ une vis de réglage (27) vissée dans un trou taraudé à cet effet (28) prévu à travers ledit élément en forme de cale (21), ladite vis ayant une extrémité apte à venir en butée contre une partie (29) dudit berceau (17) et une extrémité opposée prévue avec une tête de commande pour un outil, de sorte qu'une rotation de ladite vis dans un premier sens provoque le glissement dudit élément en forme de cale (21) vers ladite ouverture (14) dudit siège de réception de panneau (12), poussant ledit élément de blocage intermédiaire (26) contre ladite partie en contre-dépouille (15) dudit premier côté dudit siège (12), tandis qu'une rotation de ladite vis dans le sens opposé provoque le glissement dudit élément en forme de cale (21) dans le sens opposé vers le côté inférieur (12A) du siège,
**caractérisé en ce que** ladite unité de blocage de côté de panneau (20) est interposée seulement entre ledit élément latéral formant flanc (30) et ledit premier côté (12B') du siège de réception de panneau (12), au moins un élément formant butée (40) étant prévu entre ledit deuxième côté opposé (12B") dudit siège (12) et ledit panneau, élément formant butée (40) contre lequel la deuxième surface du panneau vient en butée, de sorte que ledit panneau soit bloqué avec ses deux surfaces en contact avec ledit élément latéral formant flanc (30) sur un côté, et ledit élément formant butée (40) respectivement de l'autre côté, et ledit élément latéral formant flanc (30) dudit berceau (17) étant réalisé sous la forme d'une pièce distincte et séparée par rapport audit fond (18).

2. Le support pour panneau selon la revendication 1, dans lequel ledit berceau (17) comprend un corps d'appui (17A), sur lequel ledit fond (18) pour le bord du panneau est formé, au moins un flanc (19C) dudit berceau s'étendant depuis ledit fond, à l'opposé dudit élément latéral formant flanc (30).

3. Le support pour panneau selon la revendication 2, dans lequel ledit flanc (19C) dudit berceau (17) en face dudit élément latéral formant flanc (30) a une hauteur, dans la direction allant du côté inférieur (12) dudit siège vers l'ouverture (14) de celui-ci, inférieure à celle dudit élément latéral formant flanc (30), et plus préférablement la hauteur du flanc (19C) est inférieure à la moitié de la hauteur dudit élément latéral formant flanc (30).

4. Le support pour panneau selon la revendication 1,2 ou 3, dans lequel au moins un premier flanc (19A, 19B) et un deuxième flanc (19C), l'un en face de l'autre, s'étendent depuis ledit fond, pour contenir ledit bord du panneau.

5. Le support selon la revendication 4, dans lequel ledit premier flanc comprend deux parties (19A, 19B) faisant saillie vers le haut et espacées longitudinalement l'une de l'autre pour former un espace latéral où ledit élément latéral formant flanc (30) est agencé.

6. Le support pour panneau selon la revendication 5, dans lequel ledit premier flanc (19A, 19B) a des surfaces de contact discontinues avec ledit panneau.

7. Le support pour panneau selon l'une ou plusieurs des revendications précédentes, dans lequel ledit premier côté (12B') de ladite base (12) comprend une rainure longitudinale (50) faisant saillie vers le côté opposé, contre laquelle ledit élément latéral formant flanc (30) vient en butée.

8. Le support pour panneau selon les revendications 4, 5 ou 6 et selon la revendication 7, dans lequel ledit premier flanc (19A, 19B) vient en butée contre ladite rainure longitudinale (50).

9. Le support pour panneau selon l'une ou plusieurs des revendications précédentes, dans lequel ledit élément formant butée (40) comprend un joint longitudinal fixé au deuxième côté (12B") de ladite base (12) ou à un élément supplémentaire fixé sur ladite base en correspondance avec, ou à proximité dudit deuxième côté.

10. Le support selon l'une ou plusieurs des revendications précédentes, comprenant un dispositif (60) pour fermer longitudinalement la partie de l'ouverture (14) de ladite base (12) formée sur le côté du premier côté (12B') quand le panneau est introduit dans la base ; de préférence ledit dispositif de fermeture longitudinal (60) comprend un joint longitudinal (61) apte à venir en contact avec le panneau ; dans lequel le dispositif de fermeture longitudinal comprend de préférence une barre de section longitudinale (62) couplée à l'extrémité du premier côté (12B'), ce joint longitudinal apte à venir en contact avec le panneau étant fixé à la barre de section.

11. Le support pour panneau selon l'une ou plusieurs des revendications précédentes, dans lequel élément latéral formant flanc (30) forme un guide de glissement pour ledit élément en forme de cale (21).

12. Le support pour panneau selon l'une ou plusieurs des revendications précédentes, dans lequel ledit élément en forme de cale (21) comprend deux parties en formant de cale (21A, 21B) espacées l'une de l'autre et dans lequel dans l'espace entre lesdites parties en forme de cale, ledit trou (28) est prévu pour ladite vis de réglage (27), deux éléments de blocage intermédiaires (26) étant prévus, chacun d'entre eux étant apte à interagit avec une partie en forme de cale respective.

13. Le support pour panneau selon l'une ou plusieurs des revendications précédentes, dans lequel ledit élément de blocage intermédiaire (26) est de forme cylindrique.

14. Le support pour panneau selon l'une ou plusieurs des revendications 1 à 12, comprenant un appareil de déplacement transversal (70) pour déplacer la zone de bordure (13A) du panneau et changer ainsi l'inclinaison verticale de ce panneau.

15. Le support pour panneau selon la revendication 14, dans lequel ledit appareil de déplacement (70) comprend au moins un corps mobile (71) interposé entre ladite deuxième surface (13B") dudit panneau et la partie de berceau (19C) opposée audit élément latéral formant flanc (30), ledit corps mobile étant apte à prendre plusieurs positions ou configurations, à chacune desquelles correspond une distance différente entre la zone de bordure (13A) du panneau et le deuxième côté (12B").

16. Le support pour panneau selon la revendication 15, dans lequel ledit corps mobile (71) est connecté cinématiquement à un élément (78) pour commander son mouvement, lequel peut être de préférence actionné par l'intermédiaire d'un outil (U) qui est de préférence introduit dans le siège de la base à travers ladite ouverture.

17. Le support pour panneau selon la revendication 15 ou 16, dans lequel ledit corps mobile (71) a de préférence une épaisseur variable, plus préférentiellement, il est du type cale, c'est-à-dire qu'il a des faces fonctionnelles (72, 73) inclinées les unes par rapport aux autres, la première face fonctionnelle (72) du corps mobile en forme de cale (71) étant en contact avec la deuxième surface (13B") du panneau, et la deuxième face fonctionnelle opposée (73) se déplaçant sur ladite partie de berceau (19C) en face audit élément latéral formant flanc (30).

18. Le support pour panneau selon la revendication 15,16 ou 17, dans lequel la surface d'interface de glissement relatif entre ladite partie de berceau (19C) face audit élément latéral formant flanc (30)et ledit corps mobile (71) est inclinée par rapport à la direction d'extension longitudinale dudit siège de réception (12) du panneau, de sorte que ledit corps mobile (71), en se déplaçant le long de ladite surface d'interface inclinée, change de position à l'intérieur dudit siège (12), donc à l'intérieur dudit berceau (17), c'est-à-dire qu'il s'éloigne ou se rapproche des côtés dudit siège (12) ; ledit corps mobile étant de préférence du type cale, avec une face fonctionnelle toujours parallèle à et en contact avec la deuxième surface dudit panneau.

19. Le support pour panneau selon l'une ou plusieurs des revendications 15 à 18, dans lequel ledit corps mobile (17) comprend au moins une partie en forme de crémaillère (77), un pignon (78) étant prévu, couplé à ladite crémaillère et agissant comme élément de commande pour déplacer ledit corps mobile (71) ; ledit pignon étant de préférence pivotant sur ledit berceau et pouvant être entraîné en rotation au moyen d'un outil.

20. Le support pour panneau selon la revendication 19, dans lequel ledit corps mobile (71) a de préférence une première partie (71A), apte à être agencée entre ladite deuxième surface (12B") dudit panneau et le partie de berceau (19C) opposée audit élément latéral formant flanc (30), et une deuxième partie (71B), apte à être agencée sur une piste prévue au fond dudit berceau ; ladite partie en forme de crémaillère (77) étant de préférence prévue sur ladite deuxième partie ; ladite partie de crémaillère opposée audit élément latéral formant flanc (30) ayant de préférence un profil en zig-zag et la face fonctionnelle du corps mobile (71) lui faisant face ayant une forme complémentaire à ce profil, pour réduire le risque de glissement accidentel entre le corps mobile et le berceau lorsque le pignon n'est pas actionné.

21. Le support pour panneau selon la revendication 2 et une ou plusieurs des revendications 17 à 20, dans lequel ledit corps mobile (71) est apte à se déplacer le long dudit flanc dudit berceau, à l'opposé dudit élément latéral formant flanc (30).
